# EUROPÄISCHE PATENTANMELDUNG

(11) **EP 3 200 293 A1**
(43) Veröffentlichungstag der Anmeldung: **02.08.2017**
(21) Anmeldenummer: 16152765.0
(22) Anmeldetag: 26.01.2016
(51) Int. Cl.: H02B 1/20, H02B 1/21, H02B 1/36

(54) **ANORDNUNG EINER ELEKTRISCHEN SCHALTLEISTE UND EINER STATIONÄREN AUFNAHME FÜR DIESE**

(71) Anmelder: Jean Müller GmbH Elektrotechnische Fabrik, 65343 Eltville (DE)
(72) Erfinder: Ringel, Walter, 65399 Kiedrich (DE); Perabo, Christian, 65391 Lorch (DE); Mader, Jürgen, 65366 Geisenheim (DE)
(74) Vertreter: Quermann, Helmut

(57) **Zusammenfassung**

Die Erfindung betrifft eine Anordnung einer elektrischen Schaltleiste (11) und einer stationären Aufnahme (10) für ein Ende (13) der Schaltleiste (11), wobei die Schaltleiste (11) einschiebbar in der Aufnahme (10) gelagert ist und in Einschiebrichtung (X) vorlaufend mehrere Kontakte (14) zum Aufstecken auf elektrische Schienen (5) aufweist, sowie die Schaltleiste (11) in Einschubrichtung (X) seitlich, im Bereich dieses Endes (13) der Schaltleiste (11), elektrische Abgänge (16) aufweist.

Bei einer solchen Anordnung ist erfindungsgemäß vorgesehen, dass die elektrischen Abgänge als Steckkontakte (16) ausgebildet sind, sowie die stationäre Aufnahme (10) einen Adapter (18) aufnimmt, der schaltleistenseitig mit elektrischen Kontakten (25) für die in diese elektrischen Kontakte (25) einschiebbaren Steckkontakte (16) versehen ist, sowie der Adapter (18) mit elektrischen Abgängen (26) versehen ist, die mit den elektrischen Kontakten (25) des Adapters (18) elektrisch verbunden sind.

Eine solche Anordnung ermöglicht ein einfaches, sicheres und zeitsparendes Montieren und/oder Demontieren der elektrischen Schaltleiste bezogen sowohl auf deren Lagerung als auch deren elektrische Funktion.

## Beschreibung

Die Erfindung betrifft eine Anordnung einer elektrischen Schaltleiste und einer stationären Aufnahme für ein Ende der Schaltleiste, wobei die Schaltleiste einschiebbar in der Aufnahme gelagert ist und in Einschiebrichtung vorlaufend mehrere Kontakte zum Aufstecken auf elektrische Schienen aufweist, sowie die Schaltleiste in Einschubrichtung seitlich, im Bereich dieses Endes der Schaltleiste, elektrische Abgänge aufweist.

Es ist bekannt, Schaltschränke mit einer Vielzahl von elektrischen Schaltleisten zu bestücken, die beispielsweise als Lasttrennleisten mit NH-Sicherungen ausgebildet sind. Innerhalb des Schaltschrankes ist, benachbart einer Rückwand des Schaltschrankes, ein Sammelschienensystem angeordnet, mit dem die Schaltleisten verbindbar sind. Die Schaltleisten sind in Aufnahmen der Schaltschränke einschiebbar und weisen in Einschiebrichtung vorlaufend Kontakte entsprechend der Anzahl der Sammelschienen auf, zum Aufstecken auf die Sammelschienen.

In der Praxis werden die elektrischen Abgänge der jeweiligen Schaltleisten unterschiedlich positioniert. In einer Variante sind die elektrischen Abgänge genauso wie die Kontakte zum Aufstecken auf die Sammelschienen im, in Einschieberichtung vorlaufend befindlichen Bereich der Schaltleiste angeordnet und es werden diese Abgänge beim Einschieben der Schaltleiste auf Gegenkontakte gesteckt. Diese Doppelsteckbarkeit, somit Steckbarkeit von elektrischen Eingängen und elektrischen Abgängen, lässt sich nur bei auf diese Variante speziell gestalteter Ausbildung des Schrankes verwirklichen. Bei einer anderen Variante ist vorgesehen, dass die elektrischen Abgänge der Schaltleisten seitlich aus diesen herausgeführt sind, wobei mit den elektrischen Abgängen externe Stromkabel mittels Schraub-Klemm-Verbindungen befestigbar sind. Demzufolge ist bei dieser Variante die Montage und/oder Demontage der jeweiligen Schaltleiste sehr aufwendig.

Elektrische Schränke, insbesondere Schaltschränke, sind in Ausführungen bekannt, bei denen Schrankprofile aus Metall Verwendung finden, die der Lagerung von Aufnahmen für die Schaltleisten dienen. Auf abgewandten Seiten der jeweiligen Schaltleiste ist diese in Aufnahmen einschiebbar geführt, wobei diese Aufnahmen in den Schrankprofilen gelagert sind.

Eine Anordnung der eingangs genannten Art, die somit die Merkmale des Oberbegriffs des Patentanspruchs 1 aufweist, ist aus der DE 295 10 513 U1 bekannt.

Eine elektrische Schaltleiste ist grundsätzlich in der DE 196 17 260 C1 beschrieben.

Aufgabe der Erfindung ist es, eine Anordnung der eingangs genannten Art so weiter zu bilden, dass eine einfache, sichere und zeitsparende Montage und/oder Demontage der elektrischen Schaltleiste, bezogen sowohl auf deren Lagerung als auch deren elektrische Funktionen, möglich ist.

Gelöst wird die Aufgabe durch eine Anordnung, die gemäß den Merkmalen des Patentanspruchs 1 ausgebildet ist.

Bei der erfindungsgemäßen Anordnung ist somit vorgesehen, dass die elektrischen Abgänge der Schaltleiste als Steckkontakte ausgebildet sind und die stationäre Aufnahme einen Adapter aufnimmt, der schaltleistenseitig mit elektrischen Kontakten für die in diese elektrischen Kontakte einschiebbaren Steckkontakte versehen ist. Dieser Adapter ist mit elektrischen Abgängen versehen, die mit den elektrischen Kontakten des Adapters elektrisch verbunden sind.

Somit ermöglicht die erfindungsgemäße Anordnung eine Doppelsteckbarkeit, somit eine Steckbarkeit sowohl eingangsseitig auf die elektrischen Schienen als auch abgangsseitig auf die elektrischen Kontakte des Adapters. Da die Steckbarkeit abgangsseitig zur Seite hin erfolgt, somit über den der stationären Aufnahme zugeordneten Adapter, kann die erfindungsgemäße Anordnung schrankunabhängig verwirklicht werden. Es ist nur erforderlich, in einem elektrischen Schrank, insbesondere elektrischem Schaltschrank, Aufnahmen zu Positionieren, die dem Einschieben der Schaltleisten dienen, wobei zwei Aufnahmen pro Schaltleiste auf abgewandten Seiten der Schaltleiste ausreichend sind. Eine der Aufnahmen, nämlich diejenige, die den abgangsseitigen Steckkontakten der Schaltleiste zugeordnet ist, nimmt den Adapter auf, über den die abgangsseitige Kontaktierung bewirkt wird. Die elektrischen Abgänge des Adapters können auf unterschiedliche Art und Weise gestaltet sein. Beispielsweise sind die elektrischen Abgänge als Stromkabelanschlüsse ausgebildet oder so konzipiert, dass sie mit abgangsseitigen Stromschienen zusammenwirken.

Da der Abgang seitlich angeordnet ist, kann der Abstand der Schienen eines eingangsseitigen Sammelschienensystems beliebig und durchaus auch unterschiedlich sein.

Aufgrund der Doppelsteckbarkeit der Schaltleiste kann diese durch einfaches Einschieben oder Herausziehen montiert bzw. demontiert werden. Es ist eine einfache, sichere und zeitsparende Montage und/oder Demontage der elektrischen Schaltleiste, bezogen sowohl auf deren Lagerung, als auch auf deren elektrische Funktion, möglich.

Vorzugsweise handelt es sich bei den Schienen, auf die die Schaltleiste in Einschubrichtung vorlaufend aufsteckbar ist, um Schienen eines elektrischen Sammelschienensystems. Insbesondere sind der jeweiligen Schaltleiste zwei bis vier Schienen für entsprechende Stromphasen zugeordnet.

Vorzugsweise ist die Schaltleiste im Bereich abgewandter Enden einschiebbar gelagert. Hierbei ist die Schaltleiste im Bereich des einen Endes in der stationären Aufnahme, die den Adapter aufnimmt, gelagert. Im Bereich des anderen Endes ist die Schaltleiste in einer stationären Aufnahme, der kein Adapter zugeordnet ist, gelagert. Gemäß einer baulich besonders einfachen Gestaltung ist vorgesehen, dass die beiden stationären Aufnahmen für die jeweilige Schaltleiste identisch ausgebildet sind. Der Unterschied zwischen den beiden stationären Aufnahmen besteht nur in deren Zweckbestimmung, wobei die eine stationäre Aufnahme den Adapter aufnimmt.

Als besonders zweckmäßig wird es angesehen, wenn die Aufnahme bzw. die beiden Aufnahmen in einem Schrank, insbesondere in Schrankprofilen des Schranks, gelagert sind. Bei diesem Schrank handelt es sich insbesondere um einen Schaltschrank. Die Aufnahme bzw. die beiden Aufnahmen für die jeweilige Schaltleiste können auf unterschiedliche Art und Weise im Schrank gelagert sein. Es wird unter baulichen Gesichtspunkten und unter Montageaspekten als besonders vorteilhaft angesehen, wenn die Aufnahme bzw. die beiden Aufnahmen in dem Schrank, insbesondere in den Schrankprofilen, einsteckbar, insbesondere rastierend einsteckbar, und/oder verschraubbar gehalten sind. Eine besonders einfache Gestaltung ergibt sich für die Aufnahme für den Adapter, wenn die Aufnahme rahmenförmig ausgebildet ist. Grundsätzlich ist es nicht erforderlich, dass die Aufnahme und der dieser zugeordnete Adapter separate Bauteile darstellen. Solches wird aber als vorteilhaft angesehen. Insbesondere durchsetzt der Adapter eine Öffnung in der Aufnahme für den Adapter.

Der Adapter und die diesem zugeordnete Aufnahme können auf unterschiedlichste Art und Weise miteinander verbunden werden, wenn sie separate Bauteile darstellen. Es wird als besonders vorteilhaft angesehen, wenn der Adapter formschlüssig und/oder rastierend und/oder verschraubbar in der Aufnahme für den Adapter und/oder den Schrankprofilen gehalten ist. In aller Regel reicht es aus, wenn der Adapter ausschließlich in der Aufnahme für diesen gehalten ist, weil die Aufnahme selbst sicher in dem Schrank bzw. den Schrankprofilen gehalten ist.

Die elektrischen Abgänge des Adapters können unterschiedlich gestaltet sein. Es wird als besonders vorteilhaft angesehen, wenn die elektrischen Abgänge des Adapters als Stromkabelanschlüsse ausgebildet sind. Mit diesen Stromkabelanschlüssen werden abgangsseitige Stromkabel verbunden, insbesondere mittels Klemm-Schraub-Verbindungen verbunden, sodass die Stromkabel elektrisch leitend über die Stromkabelanschlüsse mit den schaltleistenseitigen elektrischen Kontakten des Adapters verbunden sind. Nach dieser grundlegenden Installation ist es, zum elektrischen Verbinden der Schaltleiste, nur erforderlich, diese einzuschieben, insbesondere in die beiden auf abgewandten Seiten der Schaltleiste angeordneten stationären Aufnahmen für die zugeordneten Enden der Schaltleiste, wobei die Schaltleiste eingangsseitig die Schienen kontaktiert und abgangsseitig über deren elektrische Abgänge in Form der Steckkontakte elektrisch mit dem Adapter verbunden ist.

Unter dem Aspekt einer vorteilhaften Modulbauweise weist der Adapter eine der Stromführung dienende Einheit, die die stromführenden Kontakte des Adapters, die Stromkabelanschlüsse und die elektrischen Verbindungen dieser Kontakte und Anschlüsse aufweist, auf und es ist ein nicht leitendes Gehäuse im Bereich dieser Kontakte vorgesehen. Dieses Gehäuse gewährleistet überdies einen Berührschutz im Bereich dieser Kontakte, insbesondere einen fingersicheren Berührschutz (IP2x).

Die abgangsseitigen Steckkontakte der Schaltleiste sind insbesondere als parallel zueinander angeordnete plattenförmige Kontakte ausgebildet und es sind die schaltleistenseitigen elektrischen Kontakte des Adapters als Buchsen zur Aufnahme des jeweiligen plattenförmigen Kontaktes zwischen zwei Schenkeln der Buchse ausgebildet. Hierdurch lässt sich ein sehr einfaches Montieren bzw. Demontieren der Schaltleiste im Bereich des Adapters bewerkstelligen.

Unter dem Aspekt einer weiteren Verbesserung des Berührschutzes abgangsseitig der Schaltleiste wird es als besonders vorteilhaft angesehen, dass mit dem Adapter, insbesondere dem Gehäuse des Adapters, ein Abdeckgehäuse für die Stromkabelanschlüsse verbindbar ist, wobei das Abdeckgehäuse Durchführungen für mit den Stromkabelanschlüssen verbindbare Stromkabel aufweist.

Besonders einfach und kostengünstig lässt sich der Schrank, insbesondere der Schaltschrank, bilden, wenn Schrankprofile verwendet werden, die als Blechprofile mit einem Lochmuster versehen sind, zwecks Anordnung und Lagerung der Aufnahme bzw. der Aufnahmen in variablen Positionen bezüglich der Blechprofile.

Weitere Merkmale der Erfindung sind in den Unteransprüchen, der Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines bevorzugten Ausführungsbeispiels dargestellt, ohne hierauf beschränkt zu sein. Es zeigt:
- Fig. 1: in einer räumlichen Ansicht, schräg von vorne und oben gesehen, einen Teilbereich eines elektrischen Schaltschrankes mit zwei Aufnahmen für eine nicht dargestellte Schaltleiste, bei einer Aufnahme zugeordnetem Adapter und diesem zugeordneten Gehäusen,
- Fig. 2: die Anordnung gemäß Fig. 1, in einer anderen Blickrichtung gesehen,
- Fig. 3: in einer räumlichen Darstellung in Blickrichtung gemäß Fig. 2, veranschaulicht in einer Explosionsdarstellung, den Adapter mit zugeordneten Gehäusen sowie dem Adapter zugeordneter Aufnahme, ferner der Aufnahme zugeordneten Schrankprofilen des Schaltschranks,
- Fig. 4: in einer stärkeren Explosionsdarstellung und einer Blickrichtung gemäß Fig. 1 die Anordnung gemäß Fig. 3,
- Fig. 5: in einer räumlichen Darstellung, schräg von der Seite, von hinten und von oben gesehen, eine elektrische Schaltleiste zum Einschieben in zwei dieser zugeordnete Aufnahmen des Schaltschranks,
- Fig. 6: die Schaltleiste gemäß Fig. 5 in einer räumlichen Darstellung, schräg von vorne, von der Seite und von oben gesehen, zusammen mit einem Sammelschienensystem, sowie den Aufnahmen für die Schaltleiste, dem Adapter und den diesem zugeordneten Gehäusen.

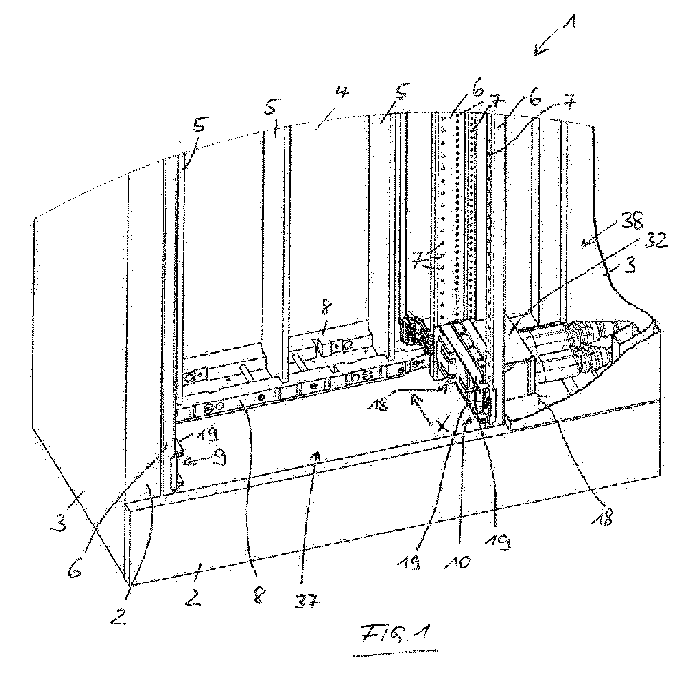

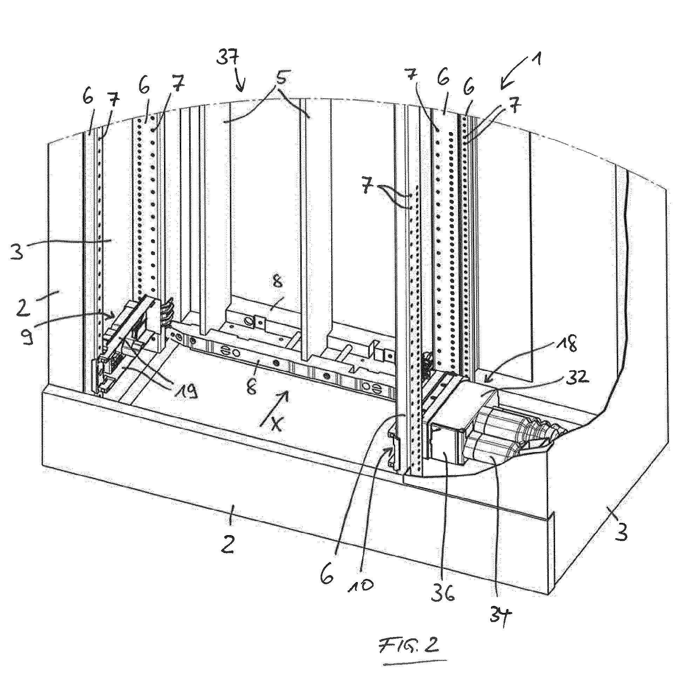

Die Fig. 1 und 2 zeigen den unteren Bereich eines elektrischen Schaltschranks 1, der eine Front 2, Seitenwände 3, eine Rückwand 4 und einen nicht veranschaulichten Deckel aufweist. Im Inneren des Schaltschranks 1 ist im Bereich der Rückwand 4 ein elektrisches Sammelschienensystem angeordnet, das aus drei parallel zueinander und im Ausführungsbeispiel in gleichem Abstand zueinander angeordneten Sammelschienen 5 gebildet ist, die sich, vertikal in deren Länge und senkrecht in deren Breite, zur Rückwand 4 erstrecken. Der Schaltschrank 1 ist in einen Einschubraum 37 für eine Vielzahl von Schaltleisten und einen neben dem Einschubraum 37 befindlichen Anschlussraum 38, in dem die Schaltleisten abgangsseitig angeschlossen werden, unterteilt.

In den Schaltschrank 1 sind Strukturelemente eingebaut. Bei diesen handelt es sich um aus Metall bestehende, vertikal angeordnete Blechprofile 6 mit Löchern 7 zur Bildung eines Lochmusters, ferner um horizontal angeordnete flache Positionierelemente 8, die dem Positionieren der Sammelschienen 5 und gegebenenfalls sonstiger innerhalb des Schaltschranks 1 anzuordnender Funktionselemente dienen. Die Blechprofile gestatten die Anordnung von Funktionskomponenten des Schaltschranks 1 in gewünschter Höhe unter Berücksichtigung des Lochmusters.

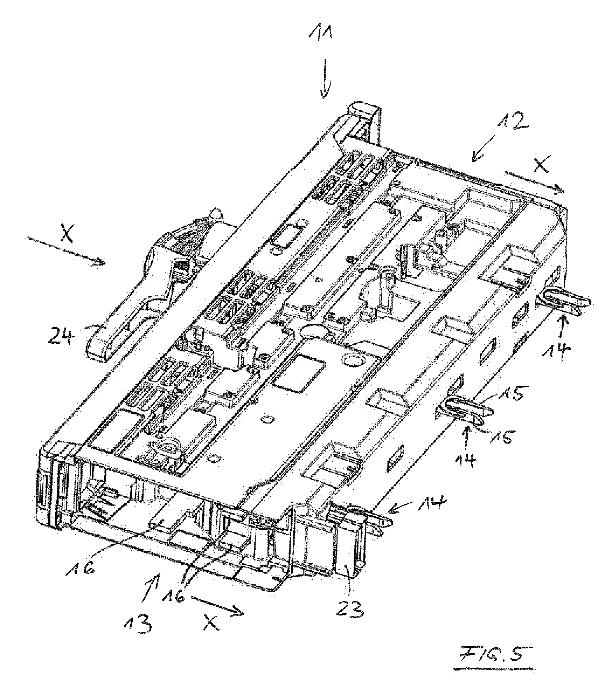

In dem auf die Orientierung der Fig. 1 und 2 bezogenen linken Bereich des Schaltschranks 1 sind zwei vertikal angeordnete Blechprofile 6 positioniert, die der Lagerung diverser Aufnahmen 9 übereinander dienen, wobei nur eine, nämlich die unterste Aufnahme 9, veranschaulicht ist. In einem Abstand von etwa einem Drittel der Breite des Schaltschranks 1, von dessen rechter Seitenwand 3 gesehen, bilden zwei weitere Blechprofile 6 das Lager für eine Vielzahl von Aufnahmen, von denen wiederum nur die unterste Aufnahme 10 veranschaulicht ist. Die Aufnahmen 9 und 10 sind als Kunststoff-Spritzgussteile ausgebildet und identisch gestaltet. Sie sind bezüglich einer zwischen diesen verlaufenden, vertikalen Ebene spiegelsymmetrisch und horizontal orientiert angeordnet und dienen der verschieblichen Lagerung einer Schaltleiste 11, wie sie in der Fig. 5 dargestellt ist, im Bereich deren abgewandten Enden 12, 13.

Bei der in der Fig. 5 dargestellten elektrischen Schaltleiste 11 handelt es sich um eine schaltbare Lasttrennleiste mit drei NH-Sicherungen, die jeweils einer der drei Phasen des Sammelschienensystems zugeordnet sind. Schalten lässt sich die Schaltleiste 11 über einen manuell betätigbaren Schalthebel 24, der dem Auslösen eines Schaltmechanismus der Schaltleiste 11 dient. Die Einschubrichtung der Schaltleiste 11 bei Führung durch die beiden Aufnahmen 9 und 10, ist in den Fig. 1 - 5 durch den Pfeil X veranschaulicht. Die Schaltleiste 11 weist in Einschubrichtung X vorlaufend drei als Buchse ausgebildete Kontakte 14 zum Aufstecken auf die Sammelschienen 5 auf. In der vollständig in den Schaltschrank 1 eingeschobenen Stellung der Schaltleiste 11 wird die jeweilige Sammelschiene 5 zwischen zwei Schenkeln 15 des jeweiligen Kontaktes 14 geklemmt. Die Kontakte 14 bilden somit die Eingangskontakte zur Kontaktierung des Sammelschienensystems des Schaltschranks 1. Im Bereich des Endes 13, das der Aufnahme 10 zugeordnet ist, weist die Schaltleiste 11 drei elektrische Abgänge auf, die als Steckkontakte 16 ausgebildet sind. Die Steckkontakte 16 sind als Abgangsstromschienen der Schaltleiste 11 ausgebildet.

Der Darstellung der Fig. 1 bis 4 ist zu entnehmen, dass die jeweilige Aufnahme 9 bzw. 10 rahmenförmig ausgebildet sind und in der Aufnahme 9 bzw. 10 eine Öffnung 17 gebildet ist. Diese Öffnung 17 durchsetzt bei der Aufnahme 10 ein Adapter 18. Veranschaulicht ist mit dem Pfeil X in diesen Figuren die Einschubrichtung der Schaltleiste 11. Diese wird über Führungsflächen 19 der Aufnahmen 9, 10 vertikal und seitlich geführt. Die jeweilige Aufnahme 9 bzw. 10 ist auf ihren den Blechprofilen 6 zugewandten Seiten mit entsprechend dem Lochraster angeordneten noppenartigen Vorsprüngen versehen, die bei definierter Positionierung der Aufnahme 9 bzw. 10 zu den Blechprofilen 6 in die den Noppen zugeordneten Löcher 7 der Blechprofile 6 einsteckbar sind. Hierdurch erfolgt die stationäre Lagerung der Aufnahme 9 bzw. 10 in den Blechprofilen 6 und damit dem Schaltschrank 1. Gegebenenfalls kann auch eine zusätzliche Verbindung von Aufnahme 9 bzw. 10 und Blechprofilen 6 mittels Befestigungselementen vorgesehen sein, insbesondere mittels Schrauben 39. Die jeweilige Aufnahme 9 bzw. 10 ist mit einem insbesondere 16-poligen Hilfsstromsteckverbinder 22 verbunden, der bei eingeschobener Schaltleiste 11 mit einem komplementären 16-poligen Hilfsstromsteckverbinder 23 (siehe Fig. 5) der Schaltleiste 11 zusammenwirkt, zum Ansteuern eines eventuell eingebauten Zubehörs (Wandler, Schaltstellungsanzeige usw.).

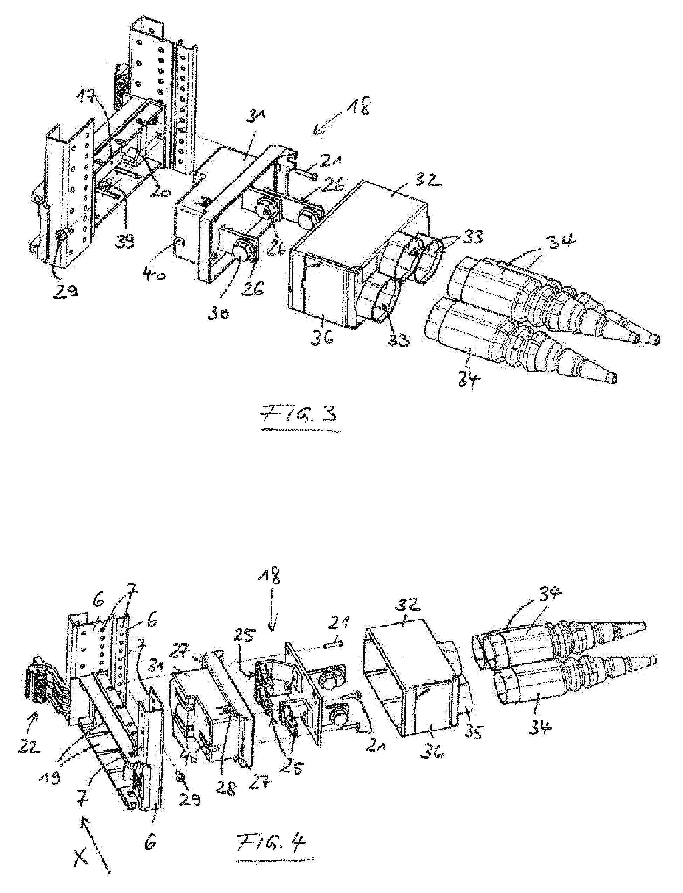

Fig. 3 und 4 veranschaulichen die besonderen Verhältnisse im Bereich der Aufnahme 10, die mit dem Adapter 18 zusammenwirkt. Dieser Adapter 18 weist schaltleistenseitig drei als Buchsen ausgebildete elektrische Kontakte 25 für die in diese Kontakte 25 einschiebbaren plattenförmigen Steckkontakte 16 der Schaltleiste 11 auf. Die U-förmigen Kontakte 25 erstrecken sich somit in Öffnungsrichtung des U entgegen der Einschubrichtung X der Schaltleiste 11. Der Adapter 18 ist ferner mit drei elektrischen Abgängen 26 versehen, die mit den elektrischen Kontakten 25 elektrisch verbunden sind, insbesondere jeweils über eine Schiene.

Zum Verbinden von Adapter 18 und Aufnahme 10 wird der Adapter in die Öffnung 17 der Aufnahme 10 eingesteckt, soweit, bis ein vorspringender umlaufender Rand 27 des Adapters 18 an Bodenplatten 20 der Aufnahme 10 anliegt und in dieser Stellung zwei Rastelemente 28 des Adapters 18 mit komplementären Rastelementen der Aufnahme 10 rastieren. Die Rastelemente 28 sind auf der Ober- und Unterseite des Adapters 18 im Wesentlichen diametral zueinander angeordnet. Abgesehen von dieser rastierenden Verbindung sind zusätzlich eine oder mehrere Schraubverbindungen zum Verbinden von Adapter 18 und Blechprofil 6 vorgesehen sein. Veranschaulicht ist eine Befestigungsschraube 29. Ferner sind Schraubverbindungen zum Verbinden von Adapter 18 und Aufnahme 10, veranschaulicht durch die Schrauben 21, vorgesehen.

Die elektrischen Abgänge 26 des Adapters 18 sind als Stromkabelanschlüsse ausgebildet. Sie weisen Anschlussklemmen mit Schrauben 30 zum Klemmen von drei Stromkabeln auf. Der Adapter 18 weist die der Stromführung dienende Einheit, die die stromführenden Kontakte 25 des Adapters, die Stromkabelanschlüsse 26 und die elektrischen Verbindungen, die die Kontakte 25 und Anschlüsse 26 aufweist, auf, sowie ein nicht leitendes Gehäuse 31 im Bereich der Kontakte 25 auf. Das Gehäuse 31 ist mit drei Schlitzen 40 zum Durchstecken der Steckkontakte 16 der Schaltleiste 11 zwecks Aufstecken der Steckkontakte 16 auf die Kontakte 25 des Adapters 18 versehen. Das Gehäuse 31 ist mit einem Gehäuse 32 für die Stromkabelanschlüsse 26 verbindbar. Hierbei weist das Gehäuse 32 Durchführungen 33 für mit den Stromkabelanschlüssen 26 verbindbare Stromkabel auf. Die Stromkabel durchsetzen jeweils einen Kabelschutz 34, der auf Ansätze 35 des Gehäuses 32 aufsteckbar ist. Somit werden die drei abgangsseitigen, nicht veranschaulichten Stromkabel berührsicher - fingersicher - bis zum Adapter 18 geführt und es ist auch das in das Schrankinnere ragende Ende des Adapters 18 berührsicher - fingersicher - mittels des Gehäuses 31 geschützt. Zum Anschließen der Stromkabel ist das Gehäuse 32 mit einem Deckel 36 versehen. Bei geöffnetem Deckel 36 ist der Innenraum des Gehäuses 32 zugänglich.

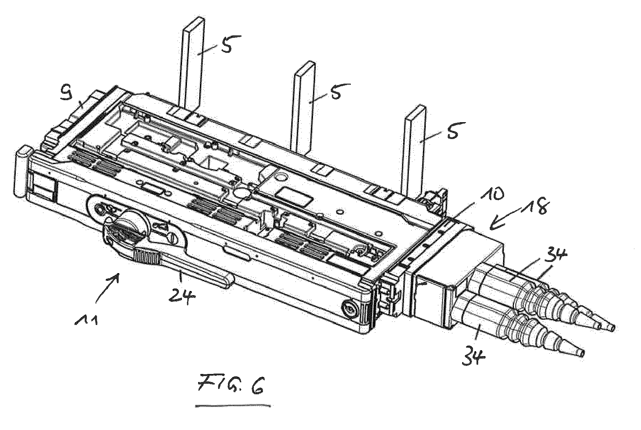

Fig. 6 zeigt die Anordnung der in die beiden Aufnahmen 9, 10 eingeschobenen elektrischen Schaltleiste 11 sowie das Sammelschienensystem mit den drei Sammelschienen 5 und den der Aufnahme 10 zugeordneten Adapter 18 mit dessen Stromabführungen, somit ohne den Schaltschrank 1 als solchen.

Die beschriebene Ausbildung des Schaltschrankes 1 ermöglicht es, die jeweilige elektrische Schaltleiste 11 einfach zu montieren, indem die Schaltleiste 11 in die beiden Aufnahmen 9, 10 eingeschoben und mittels dieser geführt wird. Bei Erreichen der maximalen Einschubstellung der Schaltleiste 11 kontaktieren sowohl die Kontakte 14 der Schaltleiste 11 die Sammelschienen 5 als auch die Steckkontakte 16 der Schaltleiste 11 die Kontakte 25 des Adapters. Zum Montieren der Schaltleiste 11 ist es nicht erforderlich, Handlungen abgangsseitig des Adapters 18 vorzunehmen. Dies gilt entsprechend auch für die Demontage der Schaltleiste 11. Es ist nur erforderlich, die Schaltleiste 11 entgegen der Richtung des Pfeiles X aus den Aufnahmen 9, 10 herauszuziehen, womit die Kontaktierung der Schaltleiste 11 eingangs- und abgangsseitig aufgehoben wird. Die Ausbildung der Kontakte von Schaltleiste 11 und Adapter 18 ist nicht auf das veranschaulichte Ausführungsbeispiel beschränkt. So kann jeweils statt eines plattenförmigen Kontakts ein Buchsenkontakt vorgesehen sein, der dann mit einem plattenförmigen Kontakt zusammenwirkt.

### Bezugszeichenliste

- 1: Schaltschrank
- 2: Front
- 3: Seitenwand
- 4: Rückwand
- 5: Sammelschiene
- 6: Blechprofil
- 7: Loch
- 8: Positionierelement
- 9: Aufnahme
- 10: Aufnahme
- 11: Schaltleiste
- 12: Ende
- 13: Ende
- 14: Kontakt
- 15: Schenkel
- 16: Steckkontakt
- 17: Öffnung
- 18: Adapter
- 19: Führungsfläche
- 20: Bodenplatte
- 21: Schraube
- 22: Hilfsstromsteckverbinder
- 23: Hilfsstromsteckverbinder
- 24: Hebel
- 25: Kontakt
- 26: Abgang
- 27: Rand
- 28: Rastelement
- 29: Schraube
- 30: Schraube
- 31: Gehäuse
- 32: Gehäuse
- 33: Durchführung
- 34: Kabelschutz
- 35: Ansatz
- 36: Deckel
- 37: Einschubraum
- 38: Anschlussraum
- 39: Schraube
- 40: Schlitz

## Patentansprüche

1. Anordnung einer elektrischen Schaltleiste (11) und einer stationären Aufnahme (10) für ein Ende (13) der Schaltleiste (11), wobei die Schaltleiste (11) einschiebbar in der Aufnahme (10) gelagert ist und in Einschiebrichtung (X) vorlaufend mehrere Kontakte (14) zum Aufstecken auf elektrische Schienen (5) aufweist, sowie die Schaltleiste (11) in Einschubrichtung (X) seitlich, im Bereich dieses Endes (13) der Schaltleiste (11), elektrische Abgänge (16) aufweist, **dadurch gekennzeichnet, dass** die elektrischen Abgänge als Steckkontakte (16) ausgebildet sind, sowie die stationäre Aufnahme (10) einen Adapter (18) aufnimmt, der schaltleistenseitig mit elektrischen Kontakten (25) für die in diese elektrischen Kontakte (25) einschiebbaren Steckkontakte (16) versehen ist, sowie der Adapter (18) mit elektrischen Abgängen (26) versehen ist, die mit den elektrischen Kontakten (25) des Adapters (18) elektrisch verbunden sind.

2. Anordnung nach Anspruch 1, **dadurch gekennzeichnet, dass** die in Einschieberichtung (X) der Schaltleiste (11) vorlaufend angeordneten Kontakte (14) auf Schienen (5) eines Sammelschienensystems aufsteckbar sind.

3. Anordnung nach Anspruch 1 oder 2, **dadurch gekennzeichnet, dass** die Schaltleiste (11) im Bereich abgewandter Enden (12, 13) einschiebbar gelagert ist, wobei die Schaltleiste (11) im Bereich eines Endes (13) in der stationären Aufnahme (10), die den Adapter (18) aufnimmt, gelagert ist und im Bereich des anderen Endes (12) in einer stationären Aufnahme (9), der kein Adapter zugeordnet ist, gelagert ist.

4. Anordnung nach einem der Ansprüche 1 bis 3, **dadurch gekennzeichnet, dass** die Aufnahme (10) bzw. die beiden Aufnahmen (9, 10) in einem Schrank (1), insbesondere in Schrankprofilen (6) des Schranks (1), gelagert sind.

5. Anordnung nach einem der Ansprüche 1 bis 4, **dadurch gekennzeichnet, dass** die Aufnahme (10) bzw. die beiden Aufnahmen (9, 10) in dem Schrank (1), insbesondere in Schrankprofilen (6) einsteckbar, insbesondere rastierend einsteckbar, und/oder verschraubbar gehalten sind.

6. Anordnung nach einem der Ansprüche 1 bis 5, **dadurch gekennzeichnet, dass** die Aufnahme (10) für den Adapter (18) rahmenförmig ausgebildet ist.

7. Anordnung nach einem der Ansprüche 1 bis 6, **dadurch gekennzeichnet, dass** die stationäre Aufnahme (10) und der Adapter (18) separate Bauteile sind.

8. Anordnung nach einem der Ansprüche 1 bis 7, **dadurch gekennzeichnet, dass** der Adapter (18) eine Öffnung in der Aufnahme (10) für den Adapter (18) durchsetzt.

9. Anordnung nach einem der Ansprüche 1 bis 8, **dadurch gekennzeichnet, dass** der Adapter (18) formschlüssig und/oder rastierend und/oder verschraubbar in der Aufnahme (10) für den Adapter (18) und/oder den Schrankprofilen (6) gehalten ist.

10. Anordnung nach einem der Ansprüche 1 bis 9, **dadurch gekennzeichnet, dass** elektrische Abgänge (26) des Adapters (18) als Stromkabelanschlüsse ausgebildet sind.

11. Anordnung nach Anspruch 10, **dadurch gekennzeichnet, dass** die Stromkabelanschlüsse (26) als Anschlussklemmen für die Stromkabel ausgebildet sind.

12. Anordnung nach Anspruch 10 oder 11, **dadurch gekennzeichnet, dass** der Adapter (18) eine der Stromzufuhr dienende Einheit, die die stromführenden Kontakte (25) des Adapters (18), die Stromkabelanschlüsse (26) und die elektrischen Verbindungen dieser Kontakte (25) und Anschlüsse (26) aufweist, sowie ein nicht leitendes Gehäuse (31) im Bereich dieser Kontakte (25) aufweist.

13. Anordnung nach einem der Ansprüche 1 bis 12, **dadurch gekennzeichnet, dass** die Steckkontakte (16) als parallel zueinander angeordnete plattenförmige Kontakte ausgebildet sind und die schaltleistenseitigen elektrischen Kontakte (25) des Adapters (18) als Buchsen zur Aufnahme des jeweiligen plattenförmigen Kontakts zwischen zwei Schenkeln der Buchse ausgebildet sind.

14. Anordnung nach einem der Ansprüche 10 bis 13, **dadurch gekennzeichnet, dass** mit dem Adapter (18), insbesondere dem Gehäuse (31) des Adapters (18), ein Gehäuse (32) für die Stromkabelanschlüsse (26) verbindbar ist, wobei das Gehäuse (32) Durchführungen (33) für mit den Stromkabelanschlüssen (26) verbindbare Stromkabel aufweist.

15. Anordnung nach einem der Ansprüche 4 bis 14, **dadurch gekennzeichnet, dass** die Schrankprofile (6) als Blechprofile (6) mit einem Lochmuster ausgebildet sind, zwecks Anordnung und Lagerung der Aufnahme (10) bzw. der Aufnahmen (9, 10) in variablen Positionen entsprechend dem Lochmuster bezüglich der Blechprofile (6).
